# EUROPÄISCHE PATENTANMELDUNG

(11) **EP 3 531 298 A1**
(43) Veröffentlichungstag der Anmeldung: **28.08.2019**
(21) Anmeldenummer: 19158677.5
(22) Anmeldetag: 21.02.2019
(51) Int. Cl.: G06F 16/2455

(54) **COMPUTERIMPLEMENTIERTES VERFAHREN ZUM BEREITSTELLEN EINER AUSKUNFT**

(30) Priorität: 27.02.2018 DE 102018104440
(71) Anmelder: DTMS GmbH, 55118 Mainz (DE)
(72) Erfinder: SOLAK, Imdat, 81539 München (DE)
(74) Vertreter: Rothkopf, Ferdinand

(57) **Zusammenfassung**

Die Erfindung betriff ein computerimplementiertes Verfahren zum Bereitstellen einer Auskunft mit den Verfahrensschritten: Eingeben eines Anfrage-Datensatzes, Ermitteln eines Antwort-Datensatzes zu dem Anfrage-Datensatz und Ausgeben des Antwort-Datensatzes, wobei bei dem Ermitteln des Antwort-Datensatzes ein Umwandeln des Anfrage-Datensatzes in einen Schlüssel-Datensatz mit einer eineindeutigen, einheitlichen Form erfolgt.

## Beschreibung

### Gebiet der Erfindung

Die Erfindung betrifft ein computerimplementiertes Verfahren zum Bereitstellen einer Auskunft mit den Verfahrensschritten: Eingeben eines Anfrage-Datensatzes, Ermitteln eines Antwort-Datensatzes zu dem Anfrage-Datensatz und Ausgeben des Antwort-Datensatzes.

### Hintergrund der Erfindung

Ein computerimplementierte Verfahren wird von einem Computerprogramm ausgeführt, das auf einem Computer installiert ist. Computerprogramme enthalten eine Folge von Anweisungen, die den Computer dazu veranlassen, bestimmte Aufgaben zu bearbeiten oder zu lösen. Das Bereitstellen einer Auskunft ist eine solche Aufgabe. Zum Bereitstellen der Auskunft wird grundsätzlich versucht, eine Information in einer Informationsquelle zu finden. Dazu wird im ersten Schritt der Anfrage-Datensatz, mit dem die Information angefragt wird, in den Computer eingegeben. Anhand des eingegebenen Anfrage-Datensatzes sucht das Computerprogramm in einem zweiten Schritt nach der Information. Wird die gesuchte Information gefunden, wird diese mit dem Antwort-Datensatz in einem dritten Schritt von dem Computer ausgegeben.

Manchmal kommt es jedoch vor, dass die Information nur mit großem Zeitaufwand oder gar nicht gefunden wird, obwohl diese in der Informationsquelle zur Verfügung steht.

Der Erfindung liegt daher die Aufgabe zugrunde, ein Verfahren zu schaffen, welches eine Auskunft schnell und zuverlässig bereitstellt.

### Zusammenfassung der Erfindung

Diese Aufgabe ist erfindungsgemäß gelöst mit einem computerimplementierten Verfahren zum Bereitstellen einer Auskunft mit den Verfahrensschritten: Eingeben eines Anfrage-Datensatzes, Ermitteln eines Antwort-Datensatzes zu dem Anfrage-Datensatz und Ausgeben des Antwort-Datensatzes, wobei bei dem Ermitteln des Antwort-Datensatzes ein Umwandeln des Anfrage-Datensatzes in einen Schlüssel-Datensatz mit einer eineindeutigen, einheitlichen Form erfolgt. Der Schlüssel-Datensatz stellt grundsätzlich eine Kodierung des Anfrage-Datensatzes dar. Seine eineindeutige Form macht ihn umkehrbar eindeutig, das heißt für den Schlüssel-Datensatz gibt es nur genau diesen einen Anfrage-Datensatz, für den es umgekehrt nur den einen Schlüssel-Datensatz gibt. Dabei ist der Schlüssel-Datensatz einheitlich geformt. Somit hat jeder Schlüssel-Datensatz, egal aus welchem Anfrage-Datensatz er entstanden ist, eine im Wesentlichen gleiche Form. Mithilfe solcher Schlüssel-Datensätze kann ein Verarbeiten der Anfrage-Datensätze standardisiert werden, was zu einem deutlichen Zeitgewinn führt.

Vorteilhaft wird der Schlüssel-Datensatz bei dem Umwandeln des Anfrage-Datensatzes als eine Zeichenfolge mit fester Länge erzeugt. Der Schlüssel-Datensatz beinhaltet also immer eine bestimmte Anzahl von Zeichen, unabhängig von der Länge des Anfrage-Datensatzes. Ein solches Vereinheitlichen ermöglicht eine effiziente Verarbeitung der Schlüssel-Datensätze.

Bevorzugt wird ferner bei dem Umwandeln des Anfrage-Datensatzes der Schlüssel-Datensatz mit einer geringeren Länge als der Anfrage-Datensatz erzeugt. Der von dem Computerprogramm zu verarbeitende Datensatz wird also kürzer. Dadurch werden Speicherressourcen eingespart.

Bei einer vorteilhaften Weiterbildung des erfindungsgemäßen computerimplementierten Verfahrens wird der Schlüssel-Datensatz bei dem Umwandeln des Anfrage-Datensatzes mittels einer Hashfunktion erzeugt. Eine Hashfunktion wird auch Streuwertfunktion genannt und dient grundsätzlich zum Abbilden einer großen Eingabemenge auf eine kleinere Zielmenge. Auf das erfindungsgemäße Verfahren bezogen bedeutet dies eine Abbildung von Abfrage-Datensätzen auf Schlüssel-Datensätze in Form von Hashwerten, wobei weniger verschiedene Hashwerte erzeugt werden können als es mögliche Abfrage-Datensätze gibt. Die Hashwerte haben dabei eine feste Länge, egal wie lang der zugehörige Anfrage-Datensatz ist. Dies gilt auch dann, wenn die Länge des Anfrage-Datensatzes ein Vielfaches der Länge des Schlüssel-Datensatzes hat. Dadurch wird der Speicherbedarf begrenzt, welcher somit nur noch von der Anzahl der Anfrage-Datensätze, jedoch nicht mehr von deren Länge abhängt.

Die Hashfunktion ist dabei vorzugsweise als eine kollisionsresistente Einweg-Hashfunktion gestaltet, insbesondere als eine kryptologische Hashfunktion nach dem Standard SHA-2 und besonders bevorzugt als die Hashfunktion SHA-256. Eine Kollision würde auftreten, wenn beim Umwandeln von mindestens zwei Anfrage-Datensätzen mittels der Hashfunktion jeweils der gleiche Schlüssel-Datensatz entsteht. Bei einer kollisionsresistenten Hashfunktion ist es praktisch unmöglich, solche Kollisionen absichtlich zu finden oder herbeizuführen. Ist die Hashfunktion auch als Einweg-Hashfunktion ausgebildet, so ist es zudem praktisch unmöglich, zu einem gegebenen Schlüssel-Datensatz den entsprechenden Anfrage-Datensatz zu finden. Die kollisionsresistente Einweg-Hashfunktion eignet sich somit als Verschlüsselungsfunktion für den Anfrage-Datensatz. Die Eigenschaften einer kollisionsfreien Einwegfunktion werden von kryptologischen Hashfunktionen erfüllt, insbesondere von kryptologischen Hashfunktionen nach dem Standard SHA-2, wobei SHA für "Secure Hash Algorithm" bzw. "Sicherer Hash-Algorithmus" steht. Die Hashfunktion SHA-256 ist eine solche kryptologische Hashfunktion nach dem Standard SHA-2, wobei der Hashwert 256 Bit lang ist. Mithilfe dieser Hashfunktion können beispielsweise selbst Anfrage-Datensätze von mehreren Megabyte in wenige Bytes umgewandelt werden, was zu einer signifikanten Reduzierung der zu speichernden Datenmenge führt.

In einer weiteren vorteilhaften Weiterbildung wird bei dem Umwandeln des Anfrage-Datensatzes der Schlüssel-Datensatz als eine Reihe von Hexadezimalzahlen, im Folgenden auch Hexadezimalzahlen-Reihe genannt, erzeugt. Hexadezimalzahlen sind Zahlen in einem Zahlensystem zur Basis 16 und eignen sich sehr gut, um Folgen von Bits darzustellen. Die Hexadezimaldarstellung der Bitfolgen ist für einen Computer, auf dem das Verfahren in Form eines Computerprogramms implementiert ist, leichter zu lesen und schneller zu schreiben. Die Verarbeitung des Schlüssel-Datensatzes wird dadurch enorm beschleunigt.

Darauf aufbauend wird der Schlüssel-Datensatz als Hexadezimalzahlen-Reihe mit 8 bis 512 Byte, insbesondere mit 16 bis 256 Byte und besonders bevorzugt mit 64 Byte erzeugt. Die Hexadezimalzahlen-Reihe, im Folgenden auch als HexDigest bezeichnet, wird vorzugsweise mittels der bereits oben beschriebenen Hashfunktion nach dem Standard SHA-2 erzeugt. Dabei wird wieder besonders bevorzugt die Hashfunktion SHA-256 benutzt, mit der ein HexDigest mit 64 Byte erzeugt wird. Dieser HexDigest bzw. der Schlüssel-Datensatz mit dem HexDigest kann dem ermittelten Antwort-Datensatz nun als Index zugewiesen werden. Mittels einer Vielzahl eingegebener und in der beschriebenen Weise umgewandelter Anfrage-Datensätze entsteht eine Art Verzeichnis, mit dem die bereits ermittelten Antwort-Datensätze schnell abgerufen werden können.

In einer besonders vorteilhaften Ausführungsform ist das Computerprogramm des erfindungsgemäßen Verfahrens in der Programmiersprache Python implementiert. Python verwendet einen internen Hash-Algorithmus für das Erzeugen des HexDigests. Das Umwandeln des Anfrage-Datensatzes in den Schlüssel-Datensatz und somit das Abrufen des ermittelten Antwort-Datensatzes wird dadurch noch schneller.

Entsprechend wird der Antwort-Datensatz in einer weiteren bevorzugten Ausführungsform bei dem Ermitteln eines Antwort-Datensatzes in einem Antwort-Datensatzspeicher gespeichert, wobei der Schlüssel-Datensatz dem Antwort-Datensatz zugewiesen wird, um diesen mittels einer Antwort-Abfrageeinrichtung schnell auffindbar zu machen. Die ermittelten Antwort-Datensätze werden somit sicher aufbewahrt und sind auf effiziente Weise abrufbar.

Zum besseren Verständnis soll ein solches Abrufen kurz erläutert werden: In einer durchsuchbaren Liste liegt für einen bereits ermittelten Antwort-Datensatz ein Schlüssel-Datensatz als Index vor, der aus dem zugehörigen Anfrage-Datensatz erzeugt wurde. Wird dieser Anfrage-Datensatz nun erneut eingegeben, wird auch der Schlüssel-Datensatz erneut erzeugt. Dieser wird dann mit den vorliegenden Schlüssel-Datensätzen in der durchsuchbaren Liste verglichen, wobei der bereits vorliegende und identische Schlüssel-Datensatz sehr schnell gefunden wird. Der zugehörige Antwort-Datensatz kann nun direkt ausgegeben werden und muss nicht mehr gesucht werden.

Wie bereits oben beschrieben, wird der Anfrage-Datensatz in einen eineindeutig geformten Schlüssel-Datensatz umgewandelt. Angenommen es werden nun zwei Anfrage-Datensätze eingegeben, für die zwei identische Antwort-Datensätze ermittelt werden, so werden dabei zwei separate und völlig unterschiedliche Schlüssel-Datensätze erzeugt. Dies geschieht auch dann, wenn sich die zugehörigen Anfrage-Datensätze nur geringfügig voneinander unterscheiden. Das Problem dabei ist, dass redundante Antwort-Datensätze entstehen, die unnötig Speicherresourcen belegen.

Daher wird in einer vorteilhaften Ausführungsform der Erfindung bei dem Ermitteln eines Antwort-Datensatzes dem gespeicherten Antwort-Datensatz mindestens ein weiterer Schlüssel-Datensatz zugewiesen. Dieser Schlüssel-Datensatz ist vorzugsweise aus einem Anfrage-Datensatz erzeugt, für den derselbe Antwort-Datensatz wie der gespeicherte Antwort-Datensatz ermittelt wurde. Somit führen unterschiedliche Anfrage-Datensätze, die nach der gleichen Information fragen, zum Ausgeben desselben Antwort-Datensatzes. Der erneut gefunden Antwort-Datensatz wird dabei nicht noch einmal gespeichert, wodurch Speicherressourcen eingespart werden.

Die Erfindung sieht ferner ein computerlesbares Speichermedium vor, mit einem Computerprogramm mit Befehlen, die bei dem Ausführen des Computerprogramms einen Computer dazu veranlassen, die Schritte mindestens einer der oben beschriebenen Ausführungsformen des computerimplementierten Verfahrens auszuführen. Das Speichermedium ist dafür vorgesehen, das Computerprogramm mit dem computerimplementierten Verfahren und mindestens einen Antwort-Datensatz mit mindestens einem zugewiesenem Schlüssel-Datensatz sicher zu speichern. Somit werden das Computerprogramm, sowie der mindestens eine Antwort-Datensatz und der mindestens eine Schlüssel-Datensatz sicher aufbewahrt.

Gemäß der Erfindung ist ferner ein Datenverarbeitungssystem zum Ausführen eines computerimplementierten Verfahrens nach mindestens einem der oben beschriebenen Ausführungsformen bereitgestellt, wobei das Datenverarbeitungssystem einen Computer, eine Eingabe-Einrichtung, eine Ausgabe-Einrichtung und ein Netzwerk aufweist, und der Computer ein Computerprogramm, eine Abfrage-Umwandlungseinrichtung und ein Speichermedium umfasst. Das Datenverarbeitungssystem ist zum Organisieren von Daten vorgesehen, und bildet die Grundlage für die oben beschriebenen Ausführungsformen des computerimplementierten Verfahrens. Der Computer ist zum Verarbeiten von Eingabe-Daten, vorzugsweise Anfrage-Datensätzen, in Ausgabe-Daten, vorzugsweise Antwort-Datensätzen, bereitgestellt. Die Eingabe-Einrichtung ist vorgesehen, um die Eingabe-Daten in den Computer einzugeben, wobei diese Eingabe-Daten bevorzugt als Anfrage-Datensätze gestaltet sind. Die Ausgabe-Einrichtung ist vorgesehen, um die Ausgabe-Daten von dem Computer auszugeben, wobei diese Daten bevorzugt als Antwort-Datensätze gestaltet sind. Das Netzwerk bietet eine externe Informationsquelle für den Computer. Als Netzwerk wird vorzugsweise das Internet verwendet. Das Computerprogramm ist zum Ausführen des computerimplementierten Verfahrens auf dem Computer vorgesehen. Die Anfrage-Umwandlungseinrichtung steht zum Erzeugen von Schlüssel-Datensätzen zur Verfügung, wobei die Schlüssel-Datensätze umgewandelte Anfrage-Datensätze sind und Schlüssel bzw. Indizes für die zugehörigen Antwort-Datensätze bilden. Das Speichermedium ist zum Speichern von Daten, insbesondere der Antwort-Datensätze, bereitgestellt. Sämtliche für das computerimplementierte Verfahren aufgeführte Vorteile gelten auch für das erfindungsgemäße Datenverarbeitungssystem.

Ferner sind weitere Ausführungsformen möglich, die das computerimplementierte Verfahren und das Datenverarbeitungssystem noch effizienter machen.

So erfolgt bei dem Ermitteln des Antwort-Datensatz vorzugsweise ein Verknüpfen des Antwort-Datensatzes mit mindestens einem Schlüssel-Datensatz mittels einer Antwort-Abfrageeinrichtung. Dabei ist die Antwort-Abfrageeinrichtung bevorzugt als relationale Datenbank gestaltet. Die Antwort-Datensätze werden somit für einen effizienten Zugriff verfügbar gemacht.

In einer vorteilhaften Ausführungsform erfolgt bei dem Ermitteln des Antwort-Datensatz vorzugsweise ein Generieren des Antwort-Datensatzes mithilfe eines externen Netzwerks. Als externes Netzwerk wird hier vorzugsweise das Internet verwendet. Dadurch wird ein Zugriff auf eine umfangreiche Datenmenge und somit eine hohe Wahrscheinlichkeit für eine erfolgreiche Antwort-Suche sichergestellt.

### Kurzbeschreibung der Zeichnungen

Nachfolgende wird ein Ausführungsbeispiel der erfindungsgemäßen Lösung anhand der beigefügten schematischen Zeichnungen näher erläutert. Es zeigt:
- Fig. 1: ein Blockdiagramm eines Ausführungsbeispiels eines erfindungsgemäßen Datenverarbeitungssystems,
- Fig. 2: das Detail II gemäß Fig. 1,
- Fig. 3: einen Programmablaufplan eines Ausführungsbeispiels eines erfindungsgemäßen computerimplementierten Verfahrens,
- Fig. 4: das Detail IV gemäß Fig.3 und
- Fig. 5: das Detail V gemäß Fig.4.

### Detaillierte Beschreibung der Erfindung

Zum besseren Verständnis werden im Folgenden zweistellige Bezugszeichen zum Bezeichnen von Komponenten und dreistellige Bezugszeichen zum Bezeichnen von Verfahrensschritten verwendet.

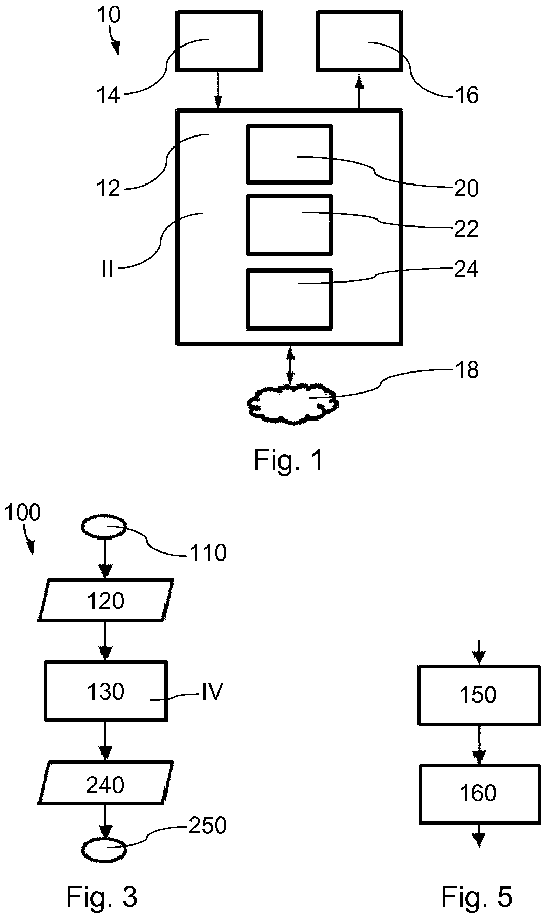

Fig.1 zeigt ein Datenverarbeitungssystem 10 in einem sehr allgemeinen Blockdiagramm mit den Komponenten 12, 14, 16, 18, 20, 22 und 24. Dabei ist ein Computer 12 als größte Komponente dargestellt. Der Computer ist mit einer Eingabe-Einrichtung 14 verbunden, hier mittels eines Pfeils in Richtung des Computers veranschaulicht. Außerdem ist der Computer 12 mit einer Ausgabe-Einrichtung 16 verbunden, hier mittels eines Pfeils in Richtung in Richtung der Ausgabe-Einrichtung 16 gezeigt. Der Computer 12 ist ebenfalls verbunden mit einem Netzwerk 18, dargestellt mit einem Doppelpfeil. Zudem sind ein Computerprogramm 20, eine Antwort-Umwandlungseinrichtung 22 und ein Speichermedium 24 als innere Komponenten des Computers 12 dargestellt.

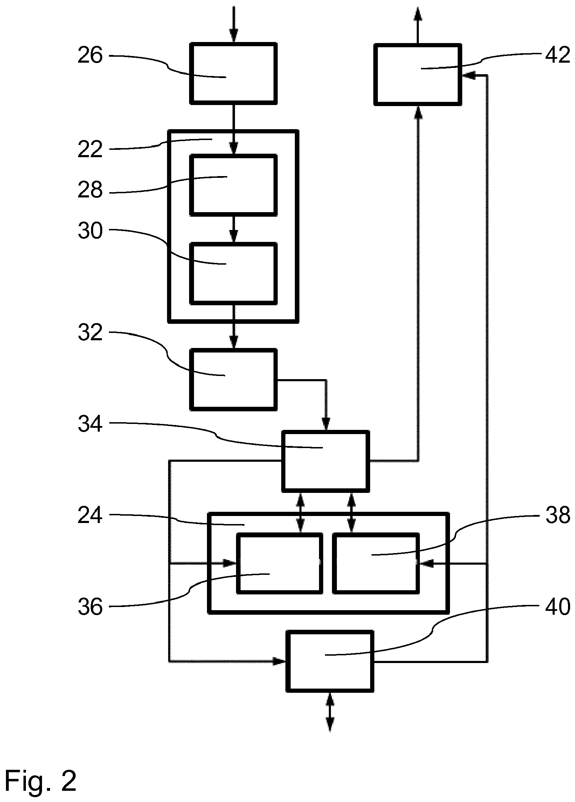

Die Eingabe-Einrichtung 14 und die Ausgabe-Einrichtung 16 sind für eine Kommunikation zwischen dem Computer 12 und einem Nutzer vorgesehen. Mittels der Eingabe-Einrichtung 14 werden Daten von dem Nutzer an den Computer 12 übertragen, wobei die Eingabe-Einrichtung 14 hier eine Tastatur ist. Mittels der Ausgabe-Einrichtung 16 werden Daten von dem Computer 12 an den Nutzer übergeben, wobei die Ausgabe-Einrichtung 16 hierein Bildschirm ist. Bei dem Netzwerk 18 handelt es sich hier um das Internet, welches für den Computer 12 als Informationsquelle verwendet wird. Das Computerprogramm 20 nutzt die Anfrage-Umwandlungseinrichtung 22 und das Speichermedium 24 zum Bereitstellen einer Auskunft. In der nachfolgenden Figurenbeschreibung zu Fig. 2 sind die in dem Computer 12 vorgesehenen Komponenten detailliert und in ihren Beziehungen zueinander dargestellt.

In Fig. 2 ist der Computer 12 mit seinen Komponenten gemäß Block II in Fig. 1 in einer detaillierteren Form abgebildet. Als Einstieg in die Fig. 2 dient hier der von außen auf die Komponente 26 zeigende Pfeil. Dabei zeigt dieser Pfeil auf einen Anfrage-Datensatz 26. Der Anfrage-Datensatz 26 ist mit einer Hashfunktion 28 in der Anfrage-Umwandlungseinrichtung 22 verbunden, gekennzeichnet mit einem Pfeil in Richtung der Hashfunktion 28. Von dort zeigt ein Pfeil zu einem HexDigest 30 bzw. einer Hexadezimalzahlen-Reihe. Von dem HexDigest 30 aus der Anfrage-Umwandlungseinrichtung 22 heraus zeigt ein Pfeil auf einen Schlüssel-Datensatz, und von dort ein weiterer Pfeil auf eine Antwort-Abfrageeinrichtung 34. Jeweils ein Doppelpfeil kennzeichnet die Verbindung der Antwort-Abfrageeinrichtung 34 mit einem Schlüssel-Datensatzspeicher 36 und einem Antwort-Datensatzspeicher 38, wobei sich die Datensatzspeicher 36, 38 in einem Speichermedium 24 befinden.

Von der Antwort-Abfrageeinrichtung 34 gehen drei Pfeile ab, wobei sich zwei Pfeile zunächst überlagern und dann bei dem Schlüssel-Datensatzspeicher 36 und bei einer Antwort-Ermittlungseinrichtung 40 enden. Der dritte Pfeil führt zu einem Antwort-Datensatz 42. Von der Antwort-Ermittlungseinrichtung 40 gehen zwei Pfeile ab, die sich zunächst überlagern und dann bei dem Antwort-Datenspeicher 38 und dem Antwort-Datensatz 42 enden. Von dem Antwort-Datensatz 42 führt ein Pfeil weg. Dieser Pfeil dient als Ausstieg aus der Fig. 2 und somit aus Block II in Fig. 1.

Nachdem die einzelnen Komponenten in dem Computer 12 des Datenverarbeitungssystems 10 mit ihren Verknüpfungen aufgeführt wurden, erfolgt nun eine funktionale Erläuterung dieser Komponenten. Der Anfrage-Datensatz 26 wird in der Anfrage-Umwandlungseinrichtung 22 mittels der Hashfunktion 28 in einen HexDigest 30 umgewandelt. Dabei entsteht der Schlüssel-Datensatz 32. In der Antwort-Abfrageeinrichtung 34 kann mittels des Schlüssel-Datensatzes 32 abgefragt werden, ob der zugehörige Antwort-Datensatz 42 im Antwort-Datensatzspeicher 38 vorliegt. Dazu wird der Schlüssel-Datensatz 32 mit dem Schlüssel-Datensatzspeicher 36 abgeglichen.

Liegt der abgefragte Schlüssel-Datensatz 32 vor, so wird der zugehörige Antwort-Datensatz 42 ausgegeben. Liegt der abgefragte Schlüssel-Datensatz 32 nicht vor, so wird er in dem Schlüssel-Datensatzspeicher 36 gespeichert. Anhand des Anfrage-Datensatzes 26 wird nun in der Antwort-Ermittlungseinrichtung 40 nach einer Information gesucht, die dann als Antwort-Datensatz 42 ausgegeben und in dem Antwort-Datensatzspeicher 38 gespeichert wird. Der von dem Antwort-Datensatz 42 nach außen zeigende Pfeil dient hier als Ausstieg aus der Fig. 2 und somit aus Block II in Fig. 1.

Die Fig. 3 zeigt ein computerimplementiertes Verfahren 100 in einem sehr allgemeinen Programmablaufplan mit den Verfahrensschritten 110, 120, 130, 240 und 250. Für die in dieser und den folgenden Figurenbeschreibungen genannten Komponenten werden die Bezugszeichen aus den Figuren 1 und 2 verwendet. Wie bereits erwähnt, wurden zur besseren Unterscheidbarkeit zweistellige Bezugszeichen für Komponenten und dreistellige Bezugszeichen für Verfahrensschritte, im Folgenden auch Schritte genannt, verwendet. Der Einstieg in das Verfahren 100 erfolgt mit einem Start 110, gefolgt von einem Eingeben 120 des Anfrage-Datensatzes 26. Nun erfolgt ein Ermitteln 130 des Antwort-Datensatzes 42, bevor dann ein Ausgeben 240 des Antwort-Datensatzes 42 als letzter Verfahrensschritt vor dem Ende 250 erfolgt. Wie das Ermitteln 130 dieses Antwort-Datensatzes 42 erfolgt, wird in den nachfolgenden Figurenbeschreibungen detailliert dargestellt.

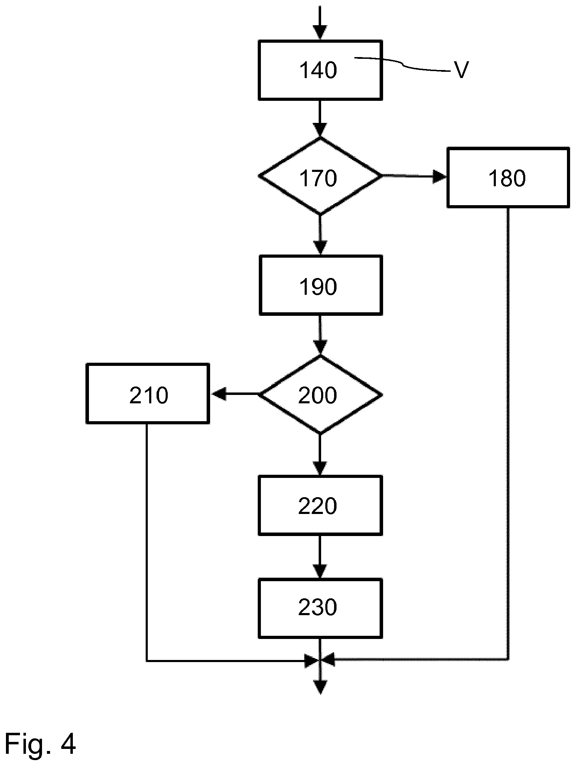

In Fig. 4 ist der Verfahrensschritt zum Ermitteln 130 des Antwort-Datensatzes 42 gemäß Detail IV in Fig. 3 in einer detaillierteren Form veranschaulicht und beinhaltet die Verfahrensschritte 140, 170, 180, 190, 210, 220 und 230. Das Umwandeln 140 des Anfrage-Datensatzes 26 in den Schlüssel-Datensatz 32 wird in der Beschreibung zu Fig. 5 im Detail erläutert. In Schritt 170 wird mithilfe der Antwort-Abfrageeinrichtung 34 festgestellt, ob der Schlüssel-Datensatz 32 in dem Schlüssel-Datensatzspeicher 36 und somit auch der zugehörige Antwort-Datensatz 42 in dem Antwort-Datensatzspeicher 38 verfügbar ist. Ist dem so, erfolgt ein Auslesen 180 des Antwort-Datensatzes 42, der dann zum Ausgeben weitergeleitet wird. Ist der Antwort-Datensatz 42 nicht verfügbar, wird in Schritt 190 nach dem Antwort-Datensatz 42 gesucht, wobei die Suche mithilfe der Antwort-Ermittlungseinrichtung 40 erfolgt, die auf das Internet 18 als Informationsquelle zugreift.

In Schritt 200 wird festgestellt, ob ein passgenauer Antwort-Datensatz 42 gefunden wurde. Konnte kein Antwort-Datensatz 42 gefunden bzw. ermittelt werden, so wird in Schritt 210 ein standardisierter Antwort-Datensatz 42 für Fehlversuche erzeugt und zum Ausgeben weitergeleitet. Wurde ein geeigneter Antwort-Datensatz 42 ermittelt, erfolgt in Schritt 220 ein Zuweisen des Schlüssel-Datensatzes 32 zu dem Antwort-Datensatz 42, gefolgt von einem Speichern 230 des Antwort-Datensatzes 42 und des zugewiesenen Schlüssel-Datensatzes 32 in dem jeweiligen Datensatzspeicher 36, 38. Schließlich wird der ermittelte Antwort-Datensatz 42 zum Ausgeben weitergeleitet.

In Fig. 5 ist der Verfahrensschritt zum Umwandeln 140 des Anfrage-Datensatzes 26 gemäß Detail V in Fig. 4 in einer detaillierteren Form veranschaulicht und beinhaltet die Verfahrensschritte 150 und 160. In Schritt 150 kommt hier speziell die Hashfunktion SHA-256 als Hashfunktion 28 zum Einsatz. Dabei wird der Anfrage-Datensatz 26 in sechzehn 32-Bit-Wörter bzw. Dateneinheiten mit jeweils einer festen Größe von 4-Byte aufgeteilt. Ein Bit-Wort, auch Datenwort oder einfach nur Wort genannt, ist die Grundverarbeitungsdatengröße bei einem Computer. Die 32-Bit-Wörter werden in Schritt 160 iterativ mit 64 Konstanten verrechnet. Die Konstanten werden aus den binären Nachkommastellen der Kubikwurzeln der ersten vierundsechzig Primzahlen gebildet. Dabei wird mit einem Start-Hash bzw. einem ersten Hashwert aus acht 32-Bit-Wörtern begonnen, welcher die ersten 32-Bits des Nachkommateils der Quadratwurzeln der ersten acht Primzahlen 2-19 enthält.

Als Ergebnis entsteht ein HexDigest bzw. eine Hexadezimalzahlen-Reihe mit einer Länge von 64 Byte bzw. 256 Bit. In einem hexadezimalen Zahlensystem bilden vier Binärstellen bzw. 4 Bit eine Hexadezimalstelle. Daher entsprechen 64 Byte hier 256 Bit. Zum Abschluss dieser Figurenbeschreibung soll noch kurz ein Beispiel für einen Schlüssel-Datensatz 32 gezeigt werden. Angenommen der Anfrage-Datensatz lautet "Was ist am 3.Oktober in Deutschland?", so wird mittels der Hashfunktion SHA-256 der HexDigest "fc7dd246c8c370c3de0529ad78bb206b9598c560aa221b4cbe950dc27cfcf6c4" erzeugt, der dann den Schlüssel-Datensatz 32 bildet. Wie oben beschrieben und anhand des Beispiels nachprüfbar, hat der erzeugte HexDigest 64 Byte bzw. 64 Hexadezimalstellen .

### Bezugszeichenliste

- 10: Datenverarbeitungssystem
- 12: Computer
- 14: Eingabe-Einrichtung
- 16: Ausgabe-Einrichtung
- 18: Netzwerk, Internet
- 20: Computerprogramm
- 22: Anfrage-Umwandlungseinrichtung
- 24: Speichermedium
- 26: Anfrage-Datensatz
- 28: Hashfunktion
- 30: HexDigest / Hexadezimalzahlen-Reihe
- 32: Schlüssel-Datensatz
- 34: Antwort-Abfrageeinrichtung
- 36: Schlüssel-Datensatzspeicher
- 38: Antwort-Datensatzspeicher
- 40: Antwort-Ermittlungseinrichtung
- 42: Antwort-Datensatz
- 100: Computerimplementiertes Verfahren
- 110: Start
- 120: Eingeben eines Anfrage-Datensatzes
- 130: Ermitteln eines Antwort-Datensatzes zu dem Anfrage-Datensatz
- 140: Umwandeln des Anfrage-Datensatzes in einen Schlüssel-Datensatz
- 150: Aufteilen des Anfrage-Datensatzes in sechzehn 32-Bit-Wörter
- 160: Verrechnen der 32-Bit-Wörter iterativ mit 64 Konstanten
- 170: Schlüssel-Datensatz verfügbar?
- 180: Ja - Auslesen des Antwort-Datensatzes
- 190: Nein - Suche nach einem Antwort-Datensatz
- 200: Antwort-Datensatz gefunden?
- 210: Nein - Erzeugen standardisierter Antwort-Datensatzes für Fehlversuche
- 220: Ja - Zuweisen des Schlüssel-Datensatzes zu dem Antwort-Datensatz
- 230: Speichern Antwort-Datensatz und zugewiesenen Schlüssel-Datensatz
- 240: Ausgeben des Antwort-Datensatzes
- 250: Ende

## Patentansprüche

1. Computerimplementiertes Verfahren (100) zum Bereitstellen einer Auskunft mit den Verfahrensschritten:
- Eingeben (120) eines Anfrage-Datensatzes (26),
- Ermitteln (130) eines Antwort-Datensatzes (42) zu dem Anfrage-Datensatz (26) und
- Ausgeben (240) des Antwort-Datensatzes (42),
**dadurch gekennzeichnet, dass** bei dem Ermitteln (130) des Antwort-Datensatzes (42) ein Umwandeln (140) des Anfrage-Datensatzes (26) in einen Schlüssel-Datensatz (32) mit einer eineindeutigen, einheitlichen Form erfolgt.

2. Computerimplementiertes Verfahren (100) nach Anspruch 1,
**dadurch gekennzeichnet, dass** bei dem Umwandeln (140) des Anfrage-Datensatzes (26) der Schlüssel-Datensatz (32) als eine Zeichenfolge mit fester Länge erzeugt wird.

3. Computerimplementiertes Verfahren (100) nach Anspruch 1 oder 2,
**dadurch gekennzeichnet, dass** bei dem Umwandeln (140) des Anfrage-Datensatzes (26) der Schlüssel-Datensatz (32) mit einer geringeren Länge als der Anfrage-Datensatz (26) erzeugt wird.

4. Computerimplementiertes Verfahren (100) nach einem der vorhergehenden Ansprüche,
**dadurch gekennzeichnet, dass** bei dem Umwandeln (140) des Anfrage-Datensatzes (26) der Schlüssel-Datensatz (32) mittels einer Hashfunktion (28) erzeugt wird.

5. Computerimplementiertes Verfahren (100) nach einem der vorhergehenden Ansprüche,
**dadurch gekennzeichnet, dass** bei dem Umwandeln (140) des Anfrage-Datensatzes (26) der Schlüssel-Datensatz (32) als eine Hexadezimalzahlen-Reihe (30) erzeugt wird.

6. Computerimplementiertes Verfahren (100) nach Anspruch 5,
**dadurch gekennzeichnet, dass** der Schlüssel-Datensatz (32) als Hexadezimalzahlen-Reihe (30) mit 8 bis 512 Byte, insbesondere mit 16 bis 256 Byte und besonders bevorzugt mit 64 Byte erzeugt wird.

7. Computerimplementiertes Verfahren (100) nach einem der vorhergehenden Ansprüche,
**dadurch gekennzeichnet, dass** bei dem Ermitteln (130) eines Antwort-Datensatzes (42) ein Speichern (230) des Antwort-Datensatzes (42) in einem Antwort-Datensatzspeicher (38) erfolgt, wobei der Schlüssel-Datensatz (32) dem Antwort-Datensatz (42) zugewiesen wird, um diesen mittels einer Antwort-Abfrageeinrichtung (34) schnell auffindbar zu machen.

8. Computerimplementiertes Verfahren (100) nach einem der vorhergehenden Ansprüche,
**dadurch gekennzeichnet, dass** bei dem Ermitteln (130) eines Antwort-Datensatzes (42) einem gespeicherten Antwort-Datensatz (42) mindestens ein weiterer Schlüssel-Datensatz (32) zugewiesen wird.

9. Computerlesbares Speichermedium (24) mit einem Computerprogramm (20) mit Befehlen, die bei dem Ausführen des Computerprogramms (20) einen Computer (12) dazu veranlassen, die Schritte eines computerimplementierten Verfahrens (100) nach einem der Ansprüche 1 bis 8 auszuführen.

10. Datenverarbeitungssystem (10) zum Ausführen eines computerimplementierten Verfahrens (100) nach einem der Ansprüche 1 bis 8, wobei das Datenverarbeitungssystem (10) einen Computer (12), eine Eingabe-Einrichtung (14), eine Ausgabe-Einrichtung (16) und ein Netzwerk (18) aufweist, und der Computer (12) ein Computerprogramm (20), eine Anfrage-Umwandlungseinrichtung (22) und ein Speichermedium (24) umfasst.
